(19)

Europäisches
Patentamt
European
Patent Office
Office européen
des brevets

(11) **EP 3 246 354 A1**

(12) **EUROPEAN PATENT APPLICATION**
published in accordance with Art. 153(4) EPC

(43) Date of publication:
**22.11.2017 Bulletin 2017/47**

(21) Application number: **16735062.8**

(22) Date of filing: **07.01.2016**

(51) Int Cl.:
*C08J 9/00* (2006.01)          *H01G 9/02* (2006.01)
*H01G 11/52* (2013.01)          *H01M 2/16* (2006.01)

(86) International application number:
**PCT/JP2016/050307**

(87) International publication number:
**WO 2016/111323 (14.07.2016 Gazette 2016/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **09.01.2015 JP 2015002950**

(71) Applicants:
• **JNC Corporation**
**Chiyoda-ku**
**Tokyo 100-8105 (JP)**
• **JNC Petrochemical Corporation**
**Tokyo 100-0004 (JP)**

(72) Inventors:
• **HONDA Kouichi**
**Ichihara-shi**
**Chiba 290-8551 (JP)**
• **YAMAMOTO Yasuhiro**
**Ichihara-shi**
**Chiba 290-8551 (JP)**
• **MAEHARA Hiroyuki**
**Ichihara-shi**
**Chiba 290-8551 (JP)**

(74) Representative: **Becker Kurig Straus**
**Patentanwälte**
**Bavariastrasse 7**
**80336 München (DE)**

(54) **MICROPOROUS MEMBRANE AND PRODUCTION METHOD THEREFOR**

(57)     Provided is a microporous membrane made of a polypropylene-based resin and having high porosity, being useful as a battery separator. The microporous membrane is composed of a polypropylene-based polymer in which a melt mass flow rate (MFR) measured at 230°C and a load of 21.18 N in accordance with JIS K6758 is 1.0 g/10 min or less, and has porosity of 50% or more. Provided is also a method for producing the same.

EP 3 246 354 A1

## Description

### Technical Field

The invention relates to a microporous membrane composed of a polypropylene-based polymer, an electric storage device obtained therefrom, and a method for producing the microporous membrane.

### Background Art

Various microporous membranes have been used as a separator of an electric storage device such as a battery and a capacitor. The microporous membrane for the separator is first required to have basic performance as the separator, such as a capability of separating an electrode and having ion conductivity. A polyolefin-based resin is useful as a material of a battery separator in view of high chemical resistance and capability of achieving high porosity by various methods . Furthermore, the polyolefin-based resin is comparatively inexpensive among synthetic resins, and therefore the battery separator made of polyolefin is advantageous also in reducing a battery production cost.

A method for achieving high porosity of a polyolefin-based resin film is generally classified into a wet process and a dry process. In the wet process, a melted mixture of the polyolefin-based resin, and a plasticizer, oil, paraffin and the like is developed into a film form. Next, components other than polyolefin are extracted to form voids in parts in which the components have existed. As a result, the polyolefin-based resin is shaped and processed into the microporous membrane. In the dry process, a method is applied in which a raw material containing neither components such as a plasticizer, oil and paraffin nor a solvent, and mainly containing the polyolefin-based resin is stretched to shape and process the polyolefin-based resin into the microporous membrane. As the dry process, such methods are known as a method in which voids are formed in interstices of a lamellar structure in the polyolefin-based resin, and a method in which voids are formed in an interface between inorganic additives added to a raw material and the polyolefin-based resin.

For example, Patent literature No. 1, No. 2 or No. 3 describes that high porosity of a polyolefin-based resin is achieved to produce a microporous membrane having high porosity, and that the microporous membrane obtained is used as a battery separator.

Patent literature No. 1 describes that a raw material composed of a mixture of the polyolefin-based resin and a conjugated diene polymer is processed into a microporous membrane having desired porosity by a wet process.

Patent literature No. 2 describes that a mixture of polypropylene and polyethylene is stretched in two steps by a dry process to be processed into a microporous membrane having desired porosity.

Patent literature No. 3 describes that a mixture obtained by compounding a low-molecular-weight material with polyolefin is stretched in two steps by a dry process to be processed into a microporous membrane having desired porosity.

However, as the method for producing the microporous membrane made of the synthetic resin, the dry process without using the solvent is advantageous in terms of a cost, and therefore achievement of a low cost is required by minimizing kinds of resins to be used and kinds of additives as much as possible. Thus, the microporous membrane and the method for producing the same as described in Patent literature No. 1, No. 2 or No. 3 described above have problems. The microporous membrane composed of the polyolefin-based resin still has room for improvement in achieving the low cost and the high porosity.

### Citation List

### Patent Literature

Patent literature No. 1: JP 2004-352834 A
Patent literature No. 2: JP 2008-248231 A
Patent literature No. 3: JP H8-20660 A

### Summary of Invention

### Technical Problem

Therefore, the present inventors have diligently continued to conduct study in order to produce a microporous membrane having excellent porosity by using, as a raw material, an inexpensive polypropylene-based resin without being blended with other resins according to a dry process.

**Solution to Problem**

As a result, the present inventors have succeeded in producing a microporous membrane having excellent porosity by using, as a raw material, a polypropylene-based resin having a specific melt mass flow rate according to a dry process.

More specifically, the invention includes items described below.

Item 1. A microporous membrane, comprising a polypropylene-based polymer having a melt mass flow rate (MFR, measured under conditions in accordance with JIS K6758 (230°C, 21.18 N)) of 1.0 g/10 min or less, and having porosity of 50% or more.

Item 2. The microporous membrane according to item 1, wherein the porosity is in the range of 50 to 60%.

Item 3. The microporous membrane according to item 1 or 2, wherein air permeability is 200 seconds per 100 milliliters or more.

Item 4. The microporous membrane according to any one of items 1 to 3, wherein the air permeability is in the range of 200 to 300 seconds per 100 milliliters.

Item 5. The microporous membrane according to any one of items 1 to 4, wherein the polypropylene-based polymer is a polymer that mainly contains propylene, in which a melting point is in the range of 150 to 170°C, and a melt mass flow rate (MFR, measured under conditions in accordance with JIS K6758 (230°C, 21.18 N)) is 1.0 g/10 min or less, and may arbitrarily contain at least one kind selected from ethylene and $\alpha$-olefin having 4 to 8 carbons.

Item 6. The microporous membrane according to any one of items 1 to 5, wherein the microporous membrane is used for a separator of an electric storage device.

Item 7. The microporous membrane according to item 6, wherein the electric storage device is a lithium ion battery.

Item 8. The microporous membrane according to item 6, wherein the electric storage device is a capacitor.

Item 9. An electric storage device, comprising the microporous membrane according to item 6.

Item 10. A lithium ion battery, comprising the microporous membrane according to item 7.

Item 11. A capacitor, comprising the microporous membrane according to item 8.

Item 12. A method for producing the microporous membrane according to any one of items 1 to 11, comprising:

a step of forming an original film by extrusion-molding a polypropylene-based polymer in which a melt mass flow rate (MFR) measured at 230°C and a load of 21.18 N in accordance with JIS K6758 is 1.0 g/10 min or less (step 1);
a step of applying heat treatment to the original film obtained in step 1 (step 2);
a step of stretching the original film after heat treatment as obtained in step 2, at -5 to 45°C by 1.0 to 1.1 times in a length direction (step 3);
a step of stretching the stretched film obtained by finishing the step 3, at a temperature lower by 5 to 65°C than a melting point of the polypropylene-based polymer by 1.5 to 4.0 times in the length direction (step 4); and
a step of relaxing the film after hot stretching as obtained in the step 4 under heating to be 0.7 to 1.0 time in length (step 5).

**Advantageous Effects of Invention**

A microporous membrane according to the invention first has porosity as high as 50% or more, and preferably 50 to 60%. Accordingly, when the microporous membrane according to the invention is used as a separator material, high ion conductivity can be expected.

Furthermore, the microporous membrane according to the invention has air permeability of 200 seconds per 100 milliliters or more, and preferably 200 to 300 seconds per 100 milliliters. In general, the number of pores per surface area of the microporous membrane is reflected on the porosity, and a mean size of micropores of the microporous membrane is reflected on the air permeability. In the above regard, in view of a balance between the porosity and the air permeability according to the invention, a large number of comparatively small micropores can be presumably formed on a surface of the microporous membrane according to the invention. Accordingly, comparatively stable and uniform substance permeability can be expected in the microporous membrane according to the invention.

**Description of Embodiments**

A microporous membrane according to the invention is composed of a polypropylene-based polymer in which a melt mass flow rate (MFR, measured in accordance with JIS K6758 (230°C, 21.18 N)) is 1.0 g/10 min or less, and has air permeability of 50% or more.

(Raw material of microporous membrane)

A raw material of the microporous membrane according to the invention is a polypropylene-based polymer, and a homopolymer of propylene or a copolymer produced by copolymerizing a comonomer with propylene corresponds to the polypropylene-based polymer. The polypropylene-based polymer to be used in the invention is a polymer having a melting point preferably in the range of 150 to 170°C, and further preferably in the range of 155 to 168°C. The comonomer is generally at least one kind selected from ethylene and $\alpha$-olefin having 4 to 8 carbons. Moreover, the polymer may be a polymer produced by copolymerizing, together therewith, branched olefins having 4 to 8 carbons, such as 2-methylpropene, 3-methyl-1-butene and 4-methyl-1-pentene, styrenes, or dienes.

A content of the comonomer may be in any range as long as the microporous membrane exhibits desired properties. The content is preferably 5 parts by weight or less, and particularly preferably 2 parts by weight, based on 100 parts by weight of the polymer, being the range in which a high-crystalline polypropylene-based polymer is provided.

Moreover, the melt mass flow rate (MFR, measured in accordance with JIS K6758 (230°C, 21.18 N)) of the polypropylene-based polymer is 1.0 g/10 min or less, and preferably 0.2 to 0.6.

An additive such as a nucleating agent and a filler can be compounded with the raw material of the microporous membrane according to the invention. A kind and an amount of the additive are not limited as long as porousness is not adversely affected.

(Method for producing microporous membrane)

The microporous membrane according to the invention is produced by using the raw material described above according to a so-called dry process. The method for producing the microporous membrane according to the invention includes steps 1 to 5 described below.

(Step 1: membrane formation step)

The step 1 is a step of forming an original film by extrusion-molding the raw material. A polypropylene-based polymer in which a melt mass flow rate (MFR) measured at 230°C and a load of 21.18 N in accordance with JIS K6758 is 1.0 g/10 min or less is fed to an extruder, and melted and kneaded at a temperature equal to or higher than a melting point thereof, and extruded from dies attached to a tip end of the extruder into a film of the propylene-based polymer. The extruder to be used is not limited. As the extruder, for example, any of a single screw extruder, a twin screw extruder and a tandem extruder can be used. As the dies to be used, any dies can be used as long as such dies are used for film formation. As the dies, for example, various T-dies can be used. A thickness and a shape of the original film are not particularly limited. A ratio (draft ratio) of a dies lip clearance to a thickness of the original film is preferably 100 or more, and further preferably 150 or more. The thickness of the original film is preferably 10 to 200 micrometers, and further preferably 15 to 100 micrometers.

(Step 2: heat treatment step)

The step 2 is a step of applying heat treatment to the original film obtained by finishing the step 1. Predetermined tension in a length direction is applied to the original film at a temperature lower by 5 to 65°C, and preferably 10 to 25°C than the melting point of the polypropylene-based polymer. The tension is preferably in magnitude in which a length of the original film becomes over 1.0 time and 1.1 times or less.

(Step 3: cold stretching step)

The step 3 is a step of stretching the original film after heat treatment as obtained by finishing the step 2, at a comparatively low temperature. A stretching temperature is -5 to 45°C, and preferably 5 to 30°C. A stretch ratio in a length direction is 1.0 to 1.1, preferably 1.00 to 1.08, and further preferably 1.02 or more and less than 1.05. However, the stretch ratio is larger than 1.0 time. A stretching means is not limited. A publicly known method such as a roll stretching process and a tenter stretching process can be applied thereto. The number of steps of stretching can be arbitrarily set. Stretching in one step may be applied thereto, or stretching in two or more steps through a plurality of rolls may be applied thereto. In a cold stretching step, molecules of the polypropylene-based polymer constituting the original film are oriented. As a result, a stretched film having a lamella part in which a molecular chain is dense and a region (craze) in which an inter-lamellar molecular chain is sparse is obtained.

(Step 4: hot stretching step)

The step 4 is a step of stretching the stretched film obtained by finishing the step 3, at a comparatively high temperature. A stretching temperature is a temperature lower by 5 to 65°C, and preferably 10 to 45°C than the melting point of the polypropylene-based polymer. A stretch ratio in the length direction is 1.5 to 4.5 times, and preferably 2.0 to 4.0 times. A stretching means is not limited. A publicly known method such as a roll stretching process and a tenter stretching process can be applied thereto. The number of steps of stretching can be arbitrarily set. Stretching in one step may be applied thereto, or stretching in two or more steps through a plurality of rolls may be applied thereto. In a hot stretching step, the craze formed in the step 3 is stretched and voids are formed.

(Step 5: relaxing step)

The step 5 is a step of relaxing the film after the hot stretching as obtained by finishing the step 4 in order to prevent shrinkage of the film. A relaxing temperature is a temperature slightly higher, generally higher by i0 to 20°C than a temperature of hot stretching. A degree of relaxation is adjusted to be finally 0.7 to 1.0 time in a length of the stretched film obtained by finishing the step 4.
"Porosity" and "air permeability" of the microporous membrane according to the invention are measured under conditions described below.

(Porosity)

The porosity is expressed in terms of a value calculated according to the calculation formula described below for a microporous membrane piece having a width of 50 millimeters x a length of 120 millimeters.

```
Porosity (%) = {1 - (piece weight) / (piece area × resin
density × piece thickness)} × 100
```

(Air permeability)

The air permeability is determined by a Gurley test in an atmosphere of room temperature of 23°C ± 2°C and humidity of 50% ± 5% in accordance with JIS P8117.
The porosity of the microporous membrane according to the invention is 50% or more, and preferably in the range of 50 to 60%. The air permeability of the microporous membrane according to the invention is 200 seconds per 100 milliliters or more, and preferably 200 to 300 seconds per 100 milliliters.

**Examples**

**Example 1**

As a raw material of a microporous membrane, a propylene homopolymer was used in which a melt mass flow rate (MFR) measured in accordance with JIS K6758 (230°C, 21.18 N) was 0.5 g/10 min, and a melting point was 165°C (raw material). The raw material melted and kneaded by a single screw extruder was extruded from a T-die at a draft ratio of 159 to produce a 22 $\mu$m-thick original film (step 1). Then, the original film was subjected to heat treatment at 150°C (step 2). The original film was subjected to cold stretching at 30°C by 1.03 times in a length direction (step 3). The stretched film obtained was subjected to hot stretching at 145°C by 3.0 times in the length direction (step 4). The stretched film obtained was relaxed at 150°C to be 0.88 time in length (step 5). Thus, a microporous membrane having a final thickness of 20 $\mu$m according to the invention was obtained. Porosity and air permeability of the microporous membrane obtained were measured by the method described above, and the results are shown along with production conditions in Table 1. In addition, for measurement of the air permeability, an air permeability tester (Gurley type Densometer) made by Toyo Seiki Seisaku-Sho, Ltd. was used.

**Example 2**

As a raw material of a microporous membrane, a propylene homopolymer was used in which a melt mass flow rate (MFR) measured in accordance with JIS K6758 (230°C, 21.18 N) was 0.5 g/10 min, and a melting point was 165°C (raw material). The raw material melted and kneaded by a single screw extruder was extruded from a T-die at a draft ratio of 159 to produce a 22 $\mu$m-thick original film (step 1). Then, the original film was subjected to heat treatment at 150°C (step 2). The original film was subjected to cold stretching at 30°C by 1.04 times in a length direction (step 3). The stretched film obtained was subjected to hot stretching at 145°C by 3.0 times in the length direction (step 4). The stretched film obtained was relaxed at 150°C to be 0.88 time in length (step 5). Thus, a microporous membrane having a final thickness of 20 μm according to the invention was obtained. The evaluation results are shown along with production conditions in Table 1.

**Comparative Example 1**

As a raw material of a microporous membrane, a propylene homopolymer was used in which a melt mass flow rate (MFR) measured in accordance with JIS K6758 (230°C, 21.18 N) was 2.0 g/10 min, and a melting point was 165°C (raw material). The raw material melted and kneaded by a single screw extruder was extruded from a T-die at a draft ratio of 159 to produce a 22 μm-thick original film (step 1). Then, the original film was subjected to heat treatment at 150°C (step 2). The original film was subjected to hot stretching at 30°C by 1.07 times in a length direction (step 3). The stretched film obtained was subjected to hot stretching at 145°C by 3.2 times in the length direction (step 4). The stretched film obtained was relaxed at 150°C to be 0.88 time in length (step 5). Thus, a microporous membrane having a final thickness of 20 μm for comparison was obtained. The evaluation results are shown along with production conditions in Table 1.

**Comparative Example 2**

As a raw material of a microporous membrane, a propylene-ethylene copolymer was used in which a melt mass flow rate (MFR) measured in accordance with JIS K6758 (230°C, 21.18 N) was 1.5g/10min, and a melting point was 158°C (raw material). The raw material melted and kneaded by a single screw extruder was extruded from a T-die at a draft ratio of 159 to produce a 22 μm-thick original film (step 1). Then, the original film was subjected to heat treatment at 150°C (step 2). The original film was subjected to cold stretching at 30°C by 1.04 times in a length direction (step 3). The stretched film obtained was subjected to hot stretching at 128°C by 3.0 times in the length direction (step 4). The stretched film obtained was relaxed at 150°C to be 0.88 time in length (step 5). Thus, a microporous membrane having a final thickness of 20 μm for comparison was obtained. The evaluation results are shown along with production conditions in Table 1.

| Table 1 | | | | Example | | Comparative Example | |
|---|---|---|---|---|---|---|---|
| | | | Unit | 1 | 2 | 1 | 2 |
| Raw material | Raw material polypropylene (co)polymer | MFR | g/10 min | 0.50 | 0.50 | 2.00 | 1.50 |
| | | Melting point | °C | 165.0 | 165.0 | 165.0 | 158.0 |
| Production method | Step 1 (Film formation) | Original film thickness | μm | 22 | 22 | 22 | 22 |
| | | Draft ratio | | 159 | 159 | 159 | 205 |
| | Step 2 (Heat treatment) | Temperature | °C | 150 | 150 | 150 | 150 |
| | Step 3 (Cold stretching) | Temperature | °C | 30 | 30 | 30 | 30 |
| | | Total stretch ratio | Times | 1.03 | 1.03 | 1.04 | 1.07 |
| | Step 4 (Hot stretching) | Temperature | °C | 145 | 145 | 145 | 128 |
| | | Total stretch ratio | Times | 3.0 | 3.3 | 3.0 | 3.2 |
| | Step 5 (Relaxation) | Relaxation ratio | Times | 0.88 | 0.88 | 0.88 | 0.88 |

(continued)

| Table 1 | | | Unit | Example | | Comparative Example | |
|---|---|---|---|---|---|---|---|
| | | | | 1 | 2 | 1 | 2 |
| Evaluation | | Porosity | % | 54 | 54 | 49 | 46 |
| | | Air permiability(a) | sec/100 mL | 200 | 210 | 243 | 417 |
| | | Air permiability per thickness | (a)/20 (μm) | 10.00 | 10.50 | 12.15 | 20.85 |

The microporous membranes according to the invention obtained in Examples 1 and 3 exhibit the porosity as high as 54%. In contrast, the porosity of the microporous membranes each in Comparative Examples 1 and 2 does not reach 50%, and is poor in practicality as a battery separator. In view of a balance between the porosity and the air permeability, in Examples 1 and 2, micropores having a comparatively smaller pore diameter presumably exist with higher density in comparison with the microporous membranes in Comparative Examples 1 and 2. Such a form of micropores is reflected also on the air permeability per thickness of the microporous membrane. In Examples 1 and 2, comparatively higher ion conductivity is conceivably stably exhibited in comparison with the microporous membranes in Comparative Examples 1 and 2.

**Industrial Applicability**

A microporous membrane according to the invention has sufficient porousness, and is composed of a raw material containing no special additive. Such a microporous membrane according to the invention has excellent ion conductivity, and is useful as a material for a battery separator that can be produced at a low cost.

**Claims**

1. A microporous membrane, comprising a polypropylene-based polymer in which a melt mass flow rate (MFR, measured under conditions in accordance with JIS K6758 (230°C, 21.18 N)) is 1.0 g/10 min or less, and having porosity of 50% or more.

2. The microporous membrane according to claim 1, wherein the porosity is in the range of 50 to 60%.

3. The microporous membrane according to claim 1 or 2, wherein air permeability is 200 seconds per 100 milliliters or more.

4. The microporous membrane according to any one of claims 1 to 3, wherein the air permeability is in the range of 200 to 300 seconds per 100 milliliters.

5. The microporous membrane according to any one of claims 1 to 4, wherein the polypropylene-based polymer is a polymer that mainly contains propylene, in which a melting point is in the range of 150 to 170°C, and a melt mass flow rate (MFR, measured under conditions in accordance with JIS K6758 (230°C, 21.18 N)) is 1.0 g/10 min or less, and may arbitrarily contain at least one kind selected from ethylene and $\alpha$-olefin having 4 to 8 carbons.

6. The microporous membrane according to any one of claims 1 to 5, wherein the microporous membrane is used for a separator of an electric storage device.

7. The microporous membrane according to claim 6, wherein the electric storage device is a lithium ion battery.

8. The microporous membrane according to claim 6, wherein the electric storage device is a capacitor.

9. An electric storage device, comprising the microporous membrane according to claim 6.

**10.** A lithium ion battery, comprising the microporous membrane according to claim 7.

**11.** A capacitor, comprising the microporous membrane according to claim 8.

**12.** A method for producing the microporous membrane according to any one of claims 1 to 11, comprising:

a step of forming an original film by extrusion-molding a polypropylene-based polymer in which a melt mass flow rate (MFR) measured at 230°C and a load of 21.18 N in accordance with JIS K6758 is 1.0 g/10 min or less (step 1);
a step of applying heat treatment to the original film obtained in the step 1 (step 2);
a step of stretching the original film after heat treatment as obtained in the step 2 at -5 to 45°C by 1.0 to 1.1 times in a length direction (step 3);
a step of stretching the stretched film obtained by finishing the step 3, at a temperature lower by 5 to 65°C than a melting point of the polypropylene-based polymer by 1.5 to 4.0 times in the length direction (step 4); and
a step of relaxing the film after hot stretching as obtained in the step 4 under heating to be 0.7 to 1.0 time in length (step 5).

**INTERNATIONAL SEARCH REPORT**

| International application No. |
|---|
| PCT/JP2016/050307 |

A. CLASSIFICATION OF SUBJECT MATTER
*C08J9/00*(2006.01)i, *H01G9/02*(2006.01)i, *H01G11/52*(2013.01)i, *H01M2/16* (2006.01)i

According to International Patent Classification (IPC) or to both national classification and IPC

B. FIELDS SEARCHED

Minimum documentation searched (classification system followed by classification symbols)
C08J9/00-9/42, H01M2/14-2/18

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2010-265414 A (Asahi Kasei E-materials Corp.), 25 November 2010 (25.11.2010), claims; paragraphs [0007], [0013], [0026]; example 2 (Family: none) | 1-12 |
| E, X | JP 2016-23255 A (Asahi Kasei E-materials Corp.), 08 February 2016 (08.02.2016), example 1 (Family: none) | 1-11 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 April 2016 (04.04.16) | 12 April 2016 (12.04.16) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**INTERNATIONAL SEARCH REPORT**

International application No.

PCT/JP2016/050307

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-38655 A (Asahi Kasei E-materials Corp.), 23 February 2012 (23.02.2012), examples (Family: none) | 1-12 |
| A | JP 2014-223812 A (Mitsubishi Plastics, Inc.), 04 December 2014 (04.12.2014), claims; paragraph [0117] & JP 2008-311220 A & JP 2013-32017 A | 1-12 |

Form PCT/ISA/210 (continuation of second sheet) (January 2015)

**REFERENCES CITED IN THE DESCRIPTION**

**Patent documents cited in the description**

- JP 2004352834 A
- JP 2008248231 A
- JP H820660 A